# EUROPEAN PATENT SPECIFICATION

(11) **EP 0 807 150 B1**
(45) Date of publication and mention of the grant of the patent: **10.03.2004**
(21) Application number: 96907861.7
(22) Date of filing: 01.02.1996
(51) Int. Cl.: C09K 5/06

(54) **REVERSIBLE HYDRATED MAGNESIUM CHLORIDE PHASE CHANGE COMPOSITIONS FOR STORING ENERGY**
LATENTWÄRMESPEICHERZUSAMMENSETZUNGEN, DIE HYDRATISIERTES MAGNESIUMCHLORID ENTHALTEN
COMPOSITIONS REVERSIBLES A CHANGEMENT DE PHASE CONTENANT DU CHLORURE DE MAGNESIUM HYDRATE, POUR EMMAGASINER L'ENERGIE

(30) Priority: 01.02.1995 US 382328
(43) Date of publication of application: 19.11.1997
(73) Proprietor: THE DOW CHEMICAL COMPANY, Midland, Michigan 48674 (US)
(72) Inventor: LANE, George, A., Midland, MI 48640 (US); ROSSOW, Harold, E., Midland, MI 48640 (US); HAMMOND, Michael, J., Indianapolis, IN 46268 (US)
(74) Representative: Huber, Bernhard, Dipl.-Chem.
(86) International application number: PCT/US1996/001368
(87) International publication number: WO 1996/023848

(56) References cited:
- EP-A- 0 126 396
- US-A- 4 329 242
- US-A- 4 338 208
- US-A- 4 397 752
- US-A- 4 406 805
- MARCUS ET AL THERMOCHIMICA vol. 77, 1984, pages 219 - 226

## Description

The present invention relates to phase change materials and especially thermal energy storage materialswhich are capable of reversibly going from the solid to the liquid phase without significant degradation.

Phase change materials (PCMs) are useful for storing heat as the latent heat of fusion. Such storage has potential in heating and cooling buildings, waste heat recovery, off-peak power utilization, heat pump systems, and many other applications.

Among the PCMs that have proven useful in heat storage applications are calcium chloride hexahydrate, CaCl₂•6H₂O, and magnesium chloride hexahydrate, MgCl₂•6H₂O. A shortcoming of these materials is their tendency to supercool while they are being frozen, that is, for the temperature to drop below the melting point before the freezing process is initiated. U.S. Patents 4,272,390,4,338,208 and 4,406,805, to Lane and Rossow, describe nucleation additives for CaCl₂•6H₂O and MgCl₂•6H₂O that overcome this problem.

Thermochimica 77 (1984) 219, Marcus et al. discloses mixtures of MgCl_{2·}6H₂O and MgBr_{2·}6H₂O for thermal energy storage.

Another disadvantage of many salt hydrates, including those mentioned above, is that during the continual cycles of melting and freezing used to store and extract thermal energy, phase equilibrium relationships allow the formation of an alternate salt compound, other than that originally present. This reduces the utility of the material and eventually may render it inoperative. In the case that the alternate salt compound is an anhydrous material, this behavior is called "incongruent melting." In the case it is a hydrated material different from that originally present, the behavior is called "semi-congruent melting". These are distinguished from the desired "congruent melting" behavior, in which the frozen and melted phases have exactly the same composition.

CaCl₂•6H₂O, for example, melts at 29.6°C and is in the semicongruent-melting class. For this material, there is a small temperature range, just above the melting point, in which the salt tetrahydrate, CaCl₂•4H₂O, is thermodynamically more stable than the desired hexahydrate salt. As a result, during the freezing process, it possible to form a limited amount of salt tetrahydrate as the temperature passes through this range, and before the salt hexahydrate begins to freeze.

While alternative hydrate formation, such as the tetrahydrate formation in CaCl₂•6H₂O, may be thermodynamically favored, its occurrence is not inevitable. For example, if nucleation of the tetrahydrate of CaCl₂ is difficult, or if no nucleation centers for this structure are present, the material may supercool until the freezing point of the hexahydrate is reached, the desired material will begin to freeze, and solid tetrahydrate formation will be averted.

On the other hand, if the alternative hydrate phase does nucleate, this alternate salt hydrate will generally be dense enough to settle out of the molten hydrate, and away from the water released in the dehydration reaction. During the subsequent melting process the lower hydrate tends not to disperse and melt, and hence does not come in contact with the excess water and so does not get rehydrated, even though the higher hydrate may be thermodynamically favored at those higher temperatures. Thus, on each freeze-melt cycle, more of the undesired alternate salt hydrate can accumulate, continuing the segregation of the material.

One attempt at preventing this problem has been to include additives that thicken or gel the incongruent or semi-congruent species, thus slowing (or hopefully preventing) the settling of the undesired phase. See, for example, U.S. Pat. 3,986,969 to Telkes (1976). Many of the compositions produced by this approach have proven ineffective, in that segregation eventually occurs. Others that appear not to segregate, such as U.S. Pat. No, 4,209,413 to Kent et al. (1980), are difficult to produce.

Another attempt at solving this problem is described in U.S. Patent 4,613,444 to Lane and Rossow which discloses adding KCl, NaCl and/or SrCl₂•6H₂O to CaCl₂•6H₂O to reduce the formation of crystal forms other than CaCl₂•6H₂O during crystallization. This resulted in an effectively congruent melting PCM.

It would be beneficial to find additional phase change materials which exhibit congruent melting behavior, so that PCMs could be used for heat storage at a greater selection of temperatures. It would also be beneficial to provide effective nucleators to deter supercooling in such phase change systems.

The present invention relates to reversible liquid/solid phase change compositions comprising MgCl₂•6H₂O and one or more phase equilibrium modifying additives wherein the additive is added in an amount effective to modify the semi-congruent melting behavior of the hydrated salt by reducing the formation of crystalline salt phases other than the starting hydrate during melting of the material. The compositions of the invention also contain nucleating additives to modify and suppress the supercooling properties of the liquid phase of the phase change compositions.

MgCl₂•6H₂O behaves similarly to CaCl₂•6H₂O, in that in a small temperature range above the melting point a lower hydrate is thermodynamically favored over the higher hydrate. As in CaCl₂•6H₂O, this can lead to separation of the material, reducing the useful life of the phase change material.

A phase modifying additive is a chemical compound or compounds that is compatible with the original hydrated salt and other components in the PCM and not detrimental to the PCM's function as a thermal energy storage material, and that functions to decrease segregation during freezing and melting by having a favorable range of solubility in the PCM, and acting to decrease the formation of the undesired hydrate.

The phase modifying additive is added in an amount effective to modify the semi-congruent melting behavior of the original hydrated salt by reducing the formation of crystalline phases other than the desired phase during recrystallization of the material. Possible phase equilibrium modifying additives for MgCl₂•6H₂O include MgBr₂•6H₂O, NiCl₂•6H₂O, and CoCl₂•6H₂O. The phase equilibrium modifying additive mgBr₂·6H₂O is added in an amount of at least 10% and preferably 20% by weight, and no more than 60% and preferably 25% by weight.

Studies on MgCl₂•6H₂O with small amounts (0.5wt%) of MgBr₂•6H₂O added to test for nucleation activity were reported by G. A. Lane in "Solar Heat Storage: Latent Heat Materials, Volume I", pg. 146, CRC Press, Boco Raton, FL (1983). Although the two substances are isomorphous, the bromide additive showed no nucleation ability. This was explained as due to the excessive solubility of MgBr₂•6H₂O in the chloride PCM.

While the high solubility is believed to have caused the ineffectiveness of MgBr₂•6H₂O as a nucleating agent for MgCl₂•6H₂O, it is an important factor in the present invention. High solubility of MgBr₂•6H₂O in MgCl₂•6H₂O, comparatively small melting point depression of MgCl₂•6H₂O when MgBr₂•6H₂O is added, and the ability of MgBr₂•6H₂O to form solid solutions with MgCl₂•6H₂O are key factors in the discovered compositions.

When up to 15-20 wt% of MgBr₂•6H₂O is introduced, there is a very small decrease in melting point of the MgCl₂•6H₂O, to a minimum value. Further MgBr₂•6H₂O addition then increases the melting point When 20-25 wt% MgBr₂•6H₂O has been added, the melting point of the tetrahydrate is lower than that of the hexahydrate, and the system becomes congruent melting near the minimum temperature point. Other possible additives to MgCl₂•6H₂O include NiCl₂•6H₂O, and CoCl₂•6H₂O.

Supercooling is another phenomenon which can reduce a PCM's usefulness in heat storage devices. Supercooling is said to occur when the temperature of the material drops below the melting point before the freezing process is initiated. Nucleation additives such as described in U.S. Pat No. 4,272,390 can be used to encourage nucleation and lessen supercooling. However, since nucleators act by providing a site for initiation of crystal growth, the interaction of crystal structures of PCM and nucleation additives are critical. Because of this, effectiveness of a nudeation additive with one PCM does not generally carry over to other PCMs. The discovery of a novel PCM most often involves finding a unique set of nucleation additives. Furthermore, nucleation additives that are effective for a one-component PCM, such as MgCl₂•6H₂O or Mg(NO₃)₂•6H₂O are not necessarily effective when a second major component is added to produce a distinct two-component PCM.

The compositions of the present invention include one or more nucleating additives in an amount sufficient to reduce supercooling of the desired hydrated salt to less than 5°C. It is further preferred that the nucleating additive act as nucleating agent for the desired hydrated salt and not the undesired lower hydrated salts. In this way, any lower hydrate which might form could supercool to a temperature at which the first or original hydrate begins to solidify and segregation could be avoided. The nucleating additive is preferably added in an amount from 0.005 weight percent to 2 weight percent. Preferred nucleating additives include Ba(OH)₂, BaO, BaCO₃, BaSO₄, Sr(OH)₂, SrO, SrCO₃, Mg(OH)₂, MgO, MgCO₃, NaOH, Na₃AlF₆, CaO, Ca(OH)₂, CaCO₃, and CaC₂O₄.

It is also preferred that the MgCl₂•6H₂O together with the phase equilibrium modifying additive and the nucleating additive make up more than 75% by weight of the composition.

The invention will become more clearly understood by considering the following examples:

### EXAMPLE 1. (Reference)

A sample of powdered ACS grade MgCl₂•6H₂O was analyzed for water content by the Karl Fisher method, and found to contain 53.3 wt% H₂O. A 120 g portion of this material was subjected to repetitive freeze-melt cycles by melting it in a 120-135°C oven and then allowing it to freeze quiescently at room temperature, continuously recording the sample temperature. The solid-liquid transition point was observed at an average temperature of 116.7°C.

### EXAMPLE 2. (Reference)

A study was done to determine the stability of MgCl₂•4H₂O in melted MgCl₂•6H₂O at temperatures above 116.7°C. A sample was melted and held in a constant temperature oil bath at various temperatures above 116.7°C. After thermal equilibrium had been established, a few small crystals of MgCl₂•4H₂O were added to the clear liquid sample, and their behavior observed. Above 122.2°C the added crystals melted. Between 116.7 and 122.2°C the added crystals grew in size, but did not initiate freezing of the entire sample. This indicates thermodynamic stability for MgCl₂•4H₂O in this temperature range, and indicates that the tetrahydrate liquidus curve lies at 122.2°C for MgCl₂•6H₂O.

The conclusion is that formation of MgCl₂•4H₂O can occur during the melt-freeze cycle of MgCl₂•6H₂O. If the material were used as a thermal energy storage medi um, any tetrahydrate formation would cause segregation of the material, and significant loss of heat storage capacity.

### EXAMPLE 3. (Reference)

A mixture of 90 wt% MgCl₂•6H₂O - 10 wt% MgBr₂•6H₂O was prepared by mixing 89.99 g powdered ACS grade MgCl₂•6H₂O with 10.09 g ACS grade MgBr₂•6H₂O, placing the mixture in a closed container in a 120-135°C oven, and periodically swirling the material until it liquefied to a clear solution. A sample of this material was subjected to repetitive freeze-melt cycles by the method of Example 1. The material froze at 116.1°C. The freezing curve was isothermal, and the temperature dropped rapidly after the material was completely frozen.

### EXAMPLE 4. (Reference)

Using the composition of Example 3, a study was made of the stability of MgCl₂•4H₂O in this material, in the manner described in Example 2, the tetrahydrate liquidus was found at 116.6°C.

Thus, the addition of 10 wt% MgBr₂•6H₂O has apparently reduced the temperature span in which MgCl₂•4H₂O is stable from 5.5°C to only 0.5°C.

### EXAMPLE 5. (Reference)

Another 90 wt% MgCl₂•6H₂O - 10 wt% MgBr₂•6H₂O sample was prepared from 90.09 g powdered ACS grade MgCl₂•6H₂O and 10.04 g ACS grade MgBr₂•6H₂O by the method of Example 3. After the mixture was frozen, remelted, and mixed thoroughly, a cool stainless steel rod was inserted into the liquid, and crystals were allowed to freeze on the rod. Analysis of this small deposit of crystalline material showed it to contain 9.8 wt% MgBr₂•6H₂O, very nearly the same asthe total sample.

Si nce the composition of the first material to freeze from this composition, as represented by the material deposited on the stainless steel rod, is nearly the same as the bulk composition of the sample, then the likelihood of segregation during freeze-melt cycling is small.

### EXAMPLE 6. (Reference)

An 87.5 wt% MgCl₂•6H₂O -12.5 wt% MgBr₂•6H₂O sample was prepared from 87.53 g powdered ACS grade MgCl₂•6H₂O and 12.53 g ACS grade MgBr₂•6H₂O by the method of Example 3. An 100 g sample of this material was allowed to freeze and melt repeatedly, using the method of Example 1. The material froze at 116.2°C, the freezing curve was very isothermal, and the temperature dropped rapidly after the material was completely frozen, behavior similar to that of congruent melting compositions.

### EXAMPLE 7. (Reference)

The material of Example 6 was analyzed by ion chromatography and found to contain 12.4 wt% MgBr₂. Using the method of Example 5, a small sample of initially frozen material was collected, analyzed, and found to contain 12.5 wt% MgBr₂.

Since the initially-frozen material has essentiallythe same composition as the bulk material, we conclude that segregation would be minimal during use as a thermal energy storage medium.

### EXAMPLE 8. (Reference)

A mixture of 82.5 wt% MgCl₂•6H₂O - 17.5 wt% MgBr₂•6H₂O was prepared from 99.05 g powdered ACS grade MgCl₂•6H₂O (analyzed to contain 53.10 wt% H₂O) and 21.0 g ACS grade MgBr₂•6H₂O (analyzed to contain 37.37 wt% H₂O) by the method of Example 3. A sample of this material was allowed to freeze and melt repeatedly, by the method of Example 1. The material froze at 116.3°C. The freezing curve was very isothermal, similar to that of congruent melting compositions, and the temperature dropped rapidly after the material was completely frozen.

### EXAMPLE 9. (Reference)

An 80 wt% MgCl₂•6H₂O - 20 wt% MgBr₂•6H₂O composition was prepared from 81.1 g powdered ACS grade MgCl₂•6H₂O and 20.4 g ACS grade MgBr₂•6H₂O by the method of Example 3. An 80 g sample of this material was allowed to freeze and melt repeatedly, using the method of Example 2. The material froze at 116.4°C, the freezing curve was very isothermal, and the temperature dropped rapidly after the material was completely frozen, behavior similar to that of congruent melting compositions.

### EXAMPLE 10. (Reference)

Using the composition of Example 9, a study was done, in the manner described in Example 2, to determine the stability of MgCl₂•4H₂O in melted liquid of this composition at temperatures above 116.4°C. The tetrahydrate was found not to be stable, indicating that this composition is congruent melting.

### EXAMPLE 11. (Reference)

A sample of 60 wt% MgCl₂•6H₂O - 40 wt% MgBr₂•6H₂O was prepared by mixing 60.8 g powdered ACS grade MgCl₂•6H₂O with 40.8 g ACS grade MgBr₂•6H₂O, using the method described in Example 3, and tested by the method of Example 1. It froze at 120°C with a freezing curve that was very isothermal, similar to that of congruent melting compositions.

### EXAMPLE 12. (Reference)

A sample of 40 wt% MgCl₂•6H₂O - 60 wt% MgBr₂•6H₂O was prepared by mixing 40.6 g powdered ACS grade MgCl₂•6H₂O with 61.2 g ACS grade MgBr₂•6H₂O, using the method described in Example 3, and tested by the method of Example 1. It froze at 128-130°C with a sloping freezing curve, suggesting minimal departure from a congruent melting composition.

### EXAMPLE 13.

A 100 gram sample of 85 wt% MgCl₂•6H₂O - 15 wt.% MgBr₂•6H₂O was prepared by weighing outACS grade ingredients. The sample was placed in a 125 ml. Erlenmeyer flask and sealed with a vented rubber stopper. The sample was melted in a 125°C. oven and freezing curves were collected, using the method of Example 1, on each freezing cycle, supercooling of 5-15°C. was observed. Before thethird freezing cycle, 0.1 wt.% Mg(OH)₂ was added to the sample. Overthe next 25 cycles, supercooling was 1°C or less.

### EXAMPLE 14.

A 100 gram sample of 80 wt% MgCl₂•6H₂O - 20 wt. % MgBr₂•6H₂O was prepared and freezing curves were taken by the methods of Example 13. on each freezing cycle, supercooling of 5-15°C. was observed. Before the third freezing cycle, 0.1 wt.% Mg(OH)₂ was added to the sample. Over the next 25 cycles, supercooling was 1°C. or less.

It should be realized that the invention is not limited to the exact configuration or methods illustrated above, but that various changes and modifications may be made without departing from the scope of the invention as described within the following claims.

## Claims

1. A material suitable for use in storing heat as the latent heat of fusion consisting essentially of:
(a) MgCl₂·6H₂O, which freezes semi-congruently; and
(b) MgBr₂·6H₂O as a phase equilibrium modifying additive; and
(c) one or more nucleating additives;
wherein the MgBr₂·6H₂O phase equilibrium additive is added in an amount of from 10 weight percent to 60 weight percent so that the semi-congruent freezing behavior of MgCl₂·6H₂O is modified by reducing the formation of crystalline salt phases other than MgCl₂·6H₂O during recrystallization of the material; and wherein the nucleating additive is added in an amount sufficient to reduce supercooling on the MgCl₂·6H₂O to less than 5° C.

2. The material of Claim 1 wherein the MgBr₂·6H₂O phase equilibrium modifying additive is present in an amount of from twenty weight percent to thirty weight percent.

3. The material of Claim 1 wherein the nucleating additive or additives are present in an amount of from 0.005 weight percent to 2.0 weight percent.

4. The material of Claim 1 wherein the nucleating additive or additives are present in an amount of from 0.05 weight percent to 2.0 weight percent.

5. The material of Claim 1 wherein the nucleating additive or additives are present in an amount of from 0.05 weight percent to 0.5 weight percent.

6. The material of Claim 1 wherein the nucleating additive or additives are present in an amount of 0.5 weight percent.

7. The material as in Claim 1 wherein the phase equilibrium modifying additive or additives are selected from the group consisting of MgBr₂·6H₂O, NiCl₂·6H₂O, and CoCl₂·6H₂O. .

8. The material of Claim 1 wherein the material comprises one or more nucleating additives selected from the group consisting of Ba(OH)₂, Sr(OH)₂, CaO, SrCO₃, SrO, BaO, BaCO₃, Ca(OH)₂, CaCO₃, Mg(OH)₂, MgO, MgCO₃, Na₃AlF₆, and CaC₂O₄, added in an amount sufficient to reduce supercooling of the MgCl₂•6H₂O.

9. The material of Claim 10 wherein the nucleating additive is Mg(OH)₂.

10. The material of Claim 10 wherein the MgBr₂·6H₂O phase equilibrium modifying additive is present in an amount of from fifteen weight percent to twenty-five weight percent and the nucleating additives are present in an amount of from 0.005 weight percent to 2.0 weight percent.

## Patentansprüche

1. Material, das geeignet ist zur Speicherung von Wärme als latente Schmelzwärme, bestehend im wesentlichen aus:
(a) MgCl₂·6 H₂O, welches semikongruent gefriert; und
(b) MgBr₂·6 H₂O als ein Phasengleichgewicht-modifizierendes Additiv; und
(c) ein oder mehrere Keimbildungsadditive;
worin das MgBr₂·6 H₂O-Phasengleichgewichtsadditiv in einer Menge von 10 Gewichtsprozent bis 60 Gewichtsprozent zugegeben wird, so dass das semikongruente Gefrierverhalten von MgCl₂·6 H₂O modifiziert wird, durch Verringern der Bildung von kristallinen Salzphasen während der Rekristallisation des Materials, die von MgCl₂·6 H₂O verschieden sind; und worin das Keimbildungsadditiv in einer Menge zugegeben wird, die ausreichend ist, um ein Unterkühlen bei MgCl₂·6 H₂O auf weniger als 5°C zu verringern.

2. Material nach Anspruch 1, worin das MgBr₂·6 H₂O-Phasengleichgewichtmodifizierende Additiv in einer Menge von zwanzig Gewichtsprozent bis dreißig Gewichtsprozent vorliegt.

3. Material nach Anspruch 1, worin das Keimbildungsadditiv oder die Keimbildungsadditive in einer Menge von 0,005 Gewichtsprozent bis 2,0 Gewichtsprozent vorliegen.

4. Material nach Anspruch 1, worin das Keimbildungsadditiv oder die Keimbildungsadditive in einer Menge von 0,05 Gewichtsprozent bis 2,0 Gewichtsprozent vorliegen.

5. Material nach Anspruch 1, worin das Keimbildungsadditiv oder die Keimbildungsadditive in einer Menge von 0,05 Gewichtsprozent bis 0,5 Gewichtsprozent vorliegen.

6. Material nach Anspruch 1, worin das Keimbildungsadditiv oder die Keimbildungsadditive in einer Menge von 0,5 Gewichtsprozent vorliegen.

7. Material nach Anspruch 1, worin das Phasengleichgewicht-modifizierende Additiv oder Additive ausgewählt sind aus der Gruppe, bestehend aus MgBr₂·6 H₂O, NiCl₂·6 H₂O und CoCl₂·6 H₂O.

8. Material nach Anspruch 1, worin das Material ein oder mehrere Keimbildungsadditive umfasst, ausgewählt aus der Gruppe, bestehend aus Ba(OH)₂, Sr(OH)₂, CaO, SrCO₃, SrO, BaO, BaCO₃, Ca(OH)₂, CaCO₃, Mg(OH)₂, MgO, MgCO₃, Na₃AlF₆ und CaC₂O₄, zugegeben in einer Menge, die ausreichend ist, um das Unterkühlen von MgCl₂·6 H₂O zu verringern.

9. Verfahren nach Anspruch 1, worin das Keimbildungsadditiv Mg(OH)₂ ist.

10. Verfahren nach Anspruch 1, worin das MgBr₂.6 H₂O-Phasengleichgewichtmodifizierende Additiv in einer Menge von fünfzehn bis fünfundzwanzig Gewichtsprozent vorliegt und die Keimbildungsadditive in einer Menge von 0,005 Gewichtsprozent bis 2,0 Gewichtsprozent vorliegen.

## Revendications

1. Matériau approprié pour servir à emmagasiner de la chaleur sous forme de chaleur latente de fusion, essentiellement constitué :
a) de MgCl₂·6H₂O, dont la congélation est semi-congruente,
b) et de MgBr₂·6H₂O, comme adjuvant modifiant l'équilibre de phases,
c) ainsi que d'un ou plusieurs adjuvants de nucléation,
dans lequel matériau l'adjuvant modifiant l'équilibre des phases MgBr₂·6H₂O se trouve en une proportion pondérale de 10 à 60 %, de telle sorte que le comportement de congélation semi-congruente de MgCl₂·6H₂O est modifié en ce sens que, pendant la recristallisation du matériau, il se forme moins de phases cristallines de sels autres que MgCl₂·6H₂O, et dans lequel matériau l'adjuvant de nucléation se trouve en une quantité suffisante pour réduire à moins de 5 °C le domaine de surfusion de MgCl₂·6H₂O.

2. Matériau conforme à la revendication 1, dans lequel l'adjuvant modifiant l'équilibre des phases MgBr₂·6H₂O se trouve en une proportion pondérale de 20 à 30 %.

3. Matériau conforme à la revendication 1, dans lequel le ou les adjuvants de nucléation se trouvent en une proportion pondérale de 0,005 à 2,0 %.

4. Matériau conforme à la revendication 1, dans lequel le ou les adjuvants de nucléation se trouvent en une proportion pondérale de 0,05 à 2,0 %.

5. Matériau conforme à la revendication 1, dans lequel le ou les adjuvants de nucléation se trouvent en une proportion pondérale de 0,05 à 0,5 %.

6. Matériau conforme à la revendication 1, dans lequel le ou les adjuvants de nucléation se trouvent en une proportion pondérale de 0,5 %.

7. Matériau conforme à la revendication 1, dans lequel le ou les adjuvants modifiant l'équilibre des phases sont choisis dans l'ensemble formé par MgBr₂·6H₂O, NiCl₂·6H₂O et CoCl₂·6H₂O.

8. Matériau conforme à la revendication 1, lequel matériau comporte un ou plusieurs adjuvants de nucléation, choisis dans l'ensemble formé par Ba(OH)₂, Sr(OH)₂, CaO, SrCO₃, SrO, BaO, BaCO₃, Ca(OH)₂, CaCO₃, MgO, Mg(OH)₂, MgCO₃, Na₃AlF₆ et CaC₂O₄, et présents en une quantité suffisante pour réduire le domaine de surfusion de MgCl₂·6H₂O.

9. Matériau conforme à la revendication 1, dans lequel l'adjuvant de nucléation est Mg(OH)₂.

10. Matériau conforme à la revendication 1, dans lequel l'adjuvant modifiant l'équilibre des phases MgBr₂·6H₂O se trouve en une proportion pondérale de 15 à 25 %, et les adjuvants de nucléation se trouvent en une proportion pondérale de 0,005 à 2,0 %.
